(19) Europäisches Patentamt
European Patent Office
Office européen des brevets

(11) Veröffentlichungsnummer: **0 065 932**
**B1**

# (12) EUROPÄISCHE PATENTSCHRIFT

(45) Veröffentlichungstag der Patentschrift: **13.11.85**

(51) Int. Cl.⁴: **C 08 L 67/02**

(21) Anmeldenummer: **82810211.1**

(22) Anmeldetag: **18.05.82**

(54) **Thermoplastische Polyesterformmasse und deren Verwendung.**

(30) Priorität: **25.05.81 CH 3406/81**

(43) Veröffentlichungstag der Anmeldung: **01.12.82 Patentblatt 82/48**

(45) Bekanntmachung des Hinweises auf die Patenterteilung: **13.11.85 Patentblatt 85/46**

(84) Benannte Vertragsstaaten: **CH DE FR GB IT LI NL**

(56) Entgegenhaltungen:
**DE - A - 2 524 121**
**US - A - 3 884 870**

**CHEMICAL ABSTRACTS, Band 85, Nr. 10, 6. September 1976, Seite 68, Nr. 64278j, Columbus Ohio (USA);**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Postfach, CH-4002 Basel (CH)**

(72) Erfinder: **Breitenfellner, Franz, Dr., Im Entich 9a, D-6140 Bensheim 1 (DE)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die vorliegende Erfindung betrifft eine thermoplastische Polyesterformmasse, die calciniertes Magnesiumsulfat und gegebenenfalls verstärkende Füllstoffe, Flammschutzmittel sowie übliche Zusätze enthält und deren Verwendung zur Herstellung geformter Gegenstände.

Thermoplastische Polyester sind wertvolle Formmassen, die eine breite Anwendung in der Technik gefunden haben. Um verschiedenen Anwendungszwecken zu genügen, ist es üblich, den Polyestern Füllstoffe zuzugeben, mit denen bestimmte mechanische und elektrische Eigenschaften verbessert werden können.

Zur Erhöhung der Wärmeformbeständigkeit und Steifigkeit können verstärkende Füllstoffe wie z. B. Glasfasern zugegeben werden und zur Verminderung der Brennbarkeit werden flammhemmende Mittel einverleibt. Mit diesen Zusätzen wird jedoch die Kriechstromfestigkeit vermindert, einer bei Anwendungen im Elektrobereich wichtigen Eigenschaft.

Es sind bereits Füllstoffe zur Verbesserung der Kriechstromfestigkeit bekannt, z. B. Kaolin (DE-OS 2 616 754), Calcium- oder Bariumsulfat (DE-OS 2 524 121) und Metallborate (DE-OS 2 534 762).

Aufgabe vorliegender Erfindung ist es, thermoplastische Polyesterformmassen bereitzustellen, die eine verbesserte Steifigkeit und Kriechstromfestigkeit aufweisen.

Gegenstand vorliegender Erfindung ist eine Formmasse auf der Basis von thermoplastischen Polyestern, die, bezogen auf die Gesamtmasse,

a) 40 bis 97 Gew.-% eines thermoplastischen Polyesters,
b) 3 bis 60 Gew.-% feinteiliges Magnesiumsulfat,
c) gegebenenfalls weitere übliche Zusätze enthält.

Für die erfindungsgemäßen Formmassen geeignete lineare thermoplastische Polyester sind bevorzugt kristallin bzw. teilkristallin und weisen in diesem Fall insbesondere Schmelzpunkte von mindestens 150°C auf. Sie können jedoch auch in amorpher Form vorliegen, wobei dann der Polyester bevorzugt eine Glasumwandlungstemperatur von mindestens 70°C, besonders mindestens 100°C, aufweist. Die Intrinsic Viskosität der Polyester beträgt bevorzugt mindestens 0,6 dl/g, insbesondere mindestens 0,8 dl/g.

Bei den Polyestern kann es sich um Homo- oder Mischpolyester handeln, die aus aliphatischen, cycloaliphatischen oder aromatischen Dicarbonsäuren und Diolen oder Hydroxycarbonsäuren aufgebaut sind. Ferner sind auch Mischungen dieser Polyester geeignet. Ihre Zusammensetzung richtet sich im wesentlichen nach den gewünschten Eigenschaften für einen bestimmten Verwendungszweck.

Die aliphatischen Dicarbonsäuren können 2 bis 40 C-Atome, die cycloaliphatischen Dicarbonsäuren 6 bis 10 C-Atome, die aromatischen Dicarbonsäuren 8 bis 14 C-Atome, die aliphatischen Hydroxycarbonsäuren 2 bis 12 C-Atome und die aromatischen wie cycloaliphatischen Hydroxycarbonsäuren 7 bis 14 C-Atome enthalten.

Die aliphatischen Diole können 2 bis 12 C-Atome, die cycloaliphatischen Diole 5 bis 8 C-Atome und die aromatischen Diole 6 bis 16 C-Atome enthalten.

Als aromatische Diole werden jene bezeichnet, bei denen zwei Hydroxygruppen an einen oder verschiedene aromatische Kohlenwasserstoffreste gebunden sind.

Ferner ist es möglich, daß die Polyester mit geringen Mengen, z. B. 0,1 bis 3 Mol-%, bezogen auf die vorhandenen Dicarbonsäuren, mehr als zweifunktionellen Monomeren (z. B. Pentaerythrit oder Trimellitsäure) verzweigt sind.

Bei Polyestern aus mindestens 3 Monomeren können diese statistisch verteilt sein oder es kann sich um Blockpolymere handeln.

Geeignete Dicarbonsäuren sind lineare und verzweigte gesättigte aliphatische Dicarbonsäuren, aromatische Dicarbonsäuren und cycloaliphatische Dicarbonsäuren.

Als aliphatische Dicarbonsäuren kommen jene mit 2 bis 40 C-Atomen in Frage, z. B. Oxalsäure, Malonsäure, Dimethylmalonsäure, Bernsteinsäure, Octadecylbernsteinsäure, Pimelinsäure, Adipinsäure, Trimethyladipinsäure, Sebacinsäure, Azelainsäure und Dimersäuren (Dimerisationsprodukte von ungesättigten aliphatischen Carbonsäuren wie Ölsäure), alkylierte Malon- und Bernsteinsäuren wie Octadecylbernsteinsäure.

Als cycloaliphatische Dicarbonsäuren kommen in Frage:

1,3-Cyclobutandicarbonsäure, 1,3-Cyclopentandicarbonsäure, 1,3- und 1,4-Cyclohexandicarbonsäure, 1,3- und 1,4-Dicarboxylmethylcyclohexan, 4,4'-Dicyclohexyldicarbonsäure.

Als geeignete aromatische Dicarbonsäuren kommen in Frage:

Insbesondere Terephthalsäure, Isophthalsäure, o-Phthalsäure, sowie 1,3-, 1,4-, 2,6- oder 2,7-Naphthalindicarbonsäure, 4,4'-Diphenyldicarbonsäure, 4,4'-Diphenylsulfoncarbonsäure, 1,1,3-Trimethyl-5-boxyl-3-(p-carboxylphenyl)-indan, 4,4'-Diphenylätherdicarbonsäure, Bis-p-(carboxylphenyl)-methan.

Bevorzugt sind die aromatischen Dicarbonsäuren, unter ihnen besonders Terephthalsäure, Isophthalsäure und Orthophthalsäure.

Weitere geeignete Dicarbonsäuren sind jene, die —CO—NH-Gruppen enthalten; sie sind in der DE-OS 2 414 349 beschrieben. Auch Dicarbonsäuren, die N-heterocyclische Ringe enthalten, sind geeignet, z. B. solche, die sich von carboxyalkylierten, carboxylphenylierten oder carboxybenzylierten Monoamino-s-triazindicarbonsäuren (vgl. DE-OS 2 121 184 und 2 533 675), Mono- oder Bishydantoinen, gegebenenfalls halogenierten Benzimidazolonen oder Parabansäure ableiten. Die Carboxylalkylgruppe kann hierbei 3 bis 20 C-Atome enthalten.

Geeignete aliphatische Diole sind die linearen und verzweigten aliphatischen Glykole, besonders die mit 2 bis 12, insbesondere 2 bis 6 Kohlenstoffatomen im Molekül, z. B.:

Äthylenglykol, 1,2- und 1,3-Propylenglykol, 1,2-, 1,3-, 2,3- oder 1,4-Butandiol, Pentylglykol, Neopentylglykol, 1,6-Hexandiol, 1,12-Dodecandiol. Ein geeignetes cycloaliphatisches Diol ist z. B. 1,4-Dihydroxycyclohexan. Weitere geeignete aliphatische Diole sind z. B. 1,4-Dihydroxymethylcyclohexan, aromatisch-aliphatische Diole wie p-Xylylenglykol oder 2,5-Dichlor-p-xylylenglykol, 2,2-(β-Hydroxyäthoxyphenyl)propan sowie Polyoxaalkylenglykol wie Diäthylenglykol, Triäthylenglykol oder Polyäthylenglykol. Die Alkylendiole sind bevorzugt linear und enthalten insbesondere 2 bis 4 Kohlenstoffatome.

Bevorzugte Diole sind die Alkylendiole, 1,4-Dihydroxycyclohexan und 1,4-Dihydroxymethylcyclohexan. Insbesondere bevorzugt sind Äthylenglykol und 1,4-Butandiol.

Weitere geeignete aliphatische Diole sind die β-hydroxyalkylierten, besonders β-hydroxyäthylierten Bisphenole wie 2,2-Bis[4'-(β-hydroxyäthoxy)-phenyl]-propan. Weitere Bisphenole sind später genannt.

Eine weitere Gruppe von geeigneten aliphatischen Diolen sind die in den deutschen Offenlegungsschriften 1 812 003, 2 342 432, 2 342 372 und 2 453 326 beschriebenen heterocyclischen Diole. Beispiele sind:

N,N'-Bis-(β-hydroxyäthyl-5,5-dimethyl)hydantoin, N,N'-Bis-(β-hydroxypropyl-5,5-dimethyl)hydantoin, Methylen-bis-[N,N'-(β-hydroxyäthyl)-5-methyl-5-äthylhydantoin], Methylen-bis-[N-(β-hydroxyäthyl)-5,5-dimethyldantoin], N,N'-Bis-(β-hydroxyäthyl)-benzimidazolon, -(tetrachlor)-benzimidazolon oder -(tetrabrom)-benzimidazolon.

Als aromatische Diole kommen einkernige Diphenole in Betracht und besonders zweikernige, die an jedem aromatischen Kern eine Hydroxylgruppe tragen. Unter aromatisch werden bevorzugt kohlenwasserstoffaromatische Reste wie z. B. Phenylen oder Naphthylen verstanden. Neben z. B. Hydrochinon sind besonders die Bisphenole zu nennen, die durch die folgende Formel dargestellt werden können:

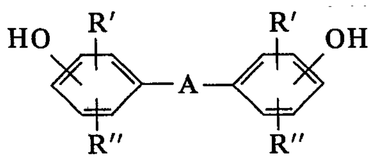

Die Hydroxylgruppen können sich in m-Stellung, besonders aber in p-Stellung befinden, R' und R'' können in dieser Formel Alkyl mit 1 bis 6 C-Atome, Halogen wie Chlor oder Brom und insbesondere Wasserstoffatome bedeuten. A kann für eine direkte Bindung stehen, oder O, S, $SO_2$, gegebenenfalls substituiertes Alkyliden, Cycloalkyliden oder Alkylen bedeuten.

Beispiele für gegebenenfalls substituierte Alkyliden sind:

Äthyliden, 1,1- oder 2,2-Propyliden, 2,2-Butyliden, 1,1-Isobutyliden, Pentyliden, Hexyliden, Heptyliden, Octyliden, Dichloräthyliden, Trichloräthyliden.

Beispiele für gegebenenfalls substituiertes Alkylen sind Methylen, Äthylen, Phenylmethylen, Diphenylmethylen, Methylphenylmethylen. Beispiele für Cycloalkyliden sind Cyclopentyliden, Cyclohexyliden, Cycloheptyliden und Cyclooctyliden.

Beispiele für Bisphenole sind:

Bis-(p-hydroxyphenyl)äther oder -thioäther, Bis-(p-hydroxyphenyl)-sulfon, Bis-(p-hydroxyphenyl)methan, 1,2-Bis-(p-hydroxyphenyl)-äthan, 1-Phenyl-bis-(p-hydroxyphenyl)methan, Diphenyl-bis-(p-hydroxyphenyl)-methan, Diphenyl-bis-(p-hydroxyphenyl)-methan, 2,2-Bis-(4'-hydroxy-3'-dimethylphenyl)-propan, 1,1- oder 2,2-Bis-(p-hydroxyphenyl)butan, 1,1-Dichlor- oder 1,1,1-Trichlor-2,2-bis(p-hydroxyphenyl)-äthan, 1,1-Bis-(p-hydroxyphenyl)cyclopentan und besonders 2,2-Bis(p-hydroxyphenyl)propan (Bisphenol-A) und 1,1-Bis-(p-hydroxyphenyl)cyclohexan (Bisphenol-C).

Geeignete Polyester von Hydroxycarbonsäuren sind z. B. Polycaprolacton, Polypivalolacton oder die Polyester von 4-Hydroxycyclohexancarbonsäure oder 4-Hydrobenzoesäure.

Polyester mit aromatischen Dicarbonsäuren haben die größte Bedeutung erlangt, insbesondere die Polyalkylenterephthalate. Bevorzugt sind daher erfindungsgemäße Formmassen, in denen der Polyester aus mindestens 30 Mol-%, bevorzugt mindestens 40 Mol-%, aromatischen Dicarbonsäuren und zu mindestens 30 Mol-%, vorzugsweise mindestens 40 Mol-%, aus Alkylendiolen mit bevorzugt 2 bis 12 C-Atomen aufgebaut ist, bezogen auf den Polyester.

Insbesondere ist in diesem Fall des Alkylendiol linear und enthält 2 bis 6 C-Atome, wie z. B. Äthylen-, Tri-, Tetra- oder Hexamethylenglykol und die aromatische Dicarbonsäure Terephthal- und/oder Isophthalsäure. Besonders bevorzugt sind als Polyester Polyäthylen- und Poly-1,4-butylenterephthalat sowie Copolyester auf der Basis von Polyäthylen- und Poly-1,4-butylenterephthalat.

Die erfindungsgemäße Formmasse kann zusätzlich einen verstärkenden (faserförmigen) Füllstoff enthalten, z. B. Asbestfasern, Kohlenstoffasern oder insbesondere Glasfasern. Die Gesamtmenge an verstärkendem Füllstoff und calciniertem Magnesiumsulfat beträgt höchstens 60 Gew.-%, bezogen auf die Gesamtmasse. Die Füllstoffe einschließlich calciniertem Magnesiumsulfat können mit einem Haftvermittler beschichtet sein, um deren Bindung an den Polyester zu verbessern.

Die erfindungsgemäße Formmasse kann auch zusätzlich 3 bis 25 Gew.-%, vorzugsweise 8 bis 20 Gew.-%, bezogen auf den Polyester, eines flammhemmenden Zusatzes enthalten.

Geeignete flammhemmende Zusätze sind z. B. organische Halogenverbindungen, besonders Chlor- oder Bromverbindungen, die alleine oder zusammen mit synergistisch wirkenden Verbindungen mit Elementen der fünften Hauptgruppe des Periodensystems, besonders von Phosphor- und Antimonverbindungen, insbesondere Antimontrioxid, verwendet werden.

Flammschutzmittel auf der Basis von organischen chlor- und/oder besonders bromhaltigen Verbindungen sind bekannt. Es kann sich hierbei um solche handeln, die dem Kunststoff als Mischkomponente einverleibt sind, oder um solche, die als reaktive Monomere in die Polymermoleküle eingebaut sind. Beispiele für letztere sind Tetrachlorphthalsäureanhydrid, Dichlortetraphthalsäure oder deren Niederalkylester, Tetrabromphthalsäureanhydrid, Tetrabrombisphenol-A, N,N'-Bis-($\beta$-hydroxyäthyl)tetrachlor- oder Tetrabrombenzimidazolon.

Weitere Beispiele für chlor- und/oder bromhaltige Verbindungen sind:

Polytribromstyrol, Polypentrabromstyrol, Decabromdiphenyl, Tetrabromdiphenyl, Hexabromdiphenyläther, Octabromdiphenyläther, Decabromdiphenyläther, Tetrabromdiphenylsulfid, Hexabromdiphenylsulfon, 3-(2',4',6'-Tribromphenoxy)-1,2-propandiol, Di- oder Tetrabromphthalsäure bzw. deren Anhydride, Dibromterephthalsäure, hydroxyäthyliertes Di- oder Tetrabrombisphenol-A, Tetrabrom-1,4-(dihydroxymethyl)-benzol, Tetrabrombenzimidazolon, N,N'-Alkylen-bis-tetrabromphthalimid sowie die chloranalogen Verbindungen. Weitere organische Halogenverbindungen sind z. B. in der deutschen Offenlegungsschrift 2 242 450 beschrieben.

In einer bevorzugten Ausführungsform der Erfindung enthält die Formmasse 3 bis 40, besonders 10 bis 30 Gew.-% calciniertes Magnesiumsulfat oder 3 bis 40 Gew.-% calciniertes Magnesiumsulfat und 5 bis 57 Gew.-% Glasfasern.

Bei dem erfindungsgemäß verwendeten Magnesiumsulfat handelt es sich hauptsächlich um feingemahlenes calciniertes Magnesiumsulfat, das z. B. eine Teilchengröße von 1 µm bis 100 µm aufweisen kann. Durch die Calcinierung ist das Kristallwasser zumindest soweit entfernt, daß bei der Einarbeitung in den Polyester ein hydrolytischer Abbau nicht befürchtet werden muß.

Die thermoplastischen Polyester sind bekannt und handelsüblich oder sie können nach bekannten Polykondensationsverfahren der Technik hergestellt werden.

Die Herstellung der erfindungsgemäßen Formmassen erfolgt ebenfalls nach in der Technik üblichen Methoden durch Einarbeiten der Zusätze in den thermoplastischen Polyester während oder nach der Polykondensation durch Zugabe zu der Reaktionsmasse bzw. durch Umgranulieren.

Es können auch weitere übliche Zusätze zugegeben werden, z. B. weitere Füllstoffe wie Talk, Glimmer, Metallpulver, Kieselsäureaerosol, Kaolin, Calciumcarbonat, Dolomit, Silikate oder Glaskugeln, anorganische oder organische Pigmente, optische Aufheller, Mattierungsmittel, Gleitmittel, Entformungshilfsmittel, kristallisationsfördernde Mittel, Antioxidantien, Lichtschutzmittel und Verarbeitungsstabilisatoren.

Die erfindungsgemäßen Formmassen haben eine helle Eigenfarbe, wodurch die Farbgebung mit Pigmenten erleichtert wird. Sie weisen eine erhöhte Steifigkeit und Kriechstromfestigkeit auf. Bei flammwidrig ausgerüsteten und/oder mit einem Verstärkerfüllstoff versehenen Formmassen ist die Kriechstromfestigkeit stark verbessert. Ferner weisen die Formmassen ausgezeichnete Zähigkeitseigenschaften auf. Bei verstärkten flammwidrig ausgerüsteten Formmassen wird überraschend auch die Tropfneigung beim Brennen unterdrückt.

Die Formmassen können nach gebräuchlichen Formgebungsverfahren wie Gießen, Pressen, Spritzgießen und Extrudieren zu Gebrauchsgegenständen aller Art verarbeitet werden. Beispiele für solche Gegenstände sind technische Apparateteile, Apparategehäuse, Haushaltsgeräte, Sportgeräte, Elektroisolationen, Automobilteile, Schaltungen, Platten, Filme und Halbzeuge, die spanabhebend verformt werden können. Ein besonderes Anwendungsgebiet ist aufgrund der guten elektrischen Eigenschaften die Herstellung von Formkörpern für den Elektrobereich.

Die folgenden Beispiele erläutern die Erfindung näher:

## Beispiele 1—2

Mit Hilfe eines Labor-Kokneters werden in Poly-1,4-butylenterephthalat (PBTP) bei einer Zylindertemperatur von 250°C die in nachfolgender Tabelle angeführten Mengen an calciniertem $MgSO_4$ eingearbeitet und die Formmasse granuliert. Das verwendete PBTP hat nach DIN 53 728/3 eine Viskositätszahl von 147 $cm^3/g$.

Nach dem Trocknen der Granulate erfolgt ihre Spritzgießverarbeitung zu Formkörpern, und zwar bei: Zylindertemperatur 250°C, Werkzeugtemperatur 80°C, Zykluszeit 45 sec. An den Formkörpern werden die in nachfolgender Tabelle angeführten Eigenschaften gemessen.

Die erfindungsgemäßen Formmassen zeichnen sich durch eine hohe Kriechstromfestigkeit und einen hohen E-Modul (Steifigkeit) aus.

## Beispiel 3

In 70 Gew.-% PBTP (Viskositätszahl nach DIN 53 728/3: 135 $cm^3/g$), welches bezogen auf das Polymere 11 Gew.-% Decabromdiphenyloxid und 5,5 Gew.-% $Sb_2O_3$ enthält, wird in analoger Weise 30 Gew.-% calciniertes $MgSO_4$ eingearbeitet.

An spritzgegossenen Formkörpern erfolgt wiederum die Bestimmung der Eigenschaften, die in nachfolgender Tabelle angegeben sind.

Die erfindungsgemäßen Formkörper in selbstverlöschender Einstellung (V-2) zeichnen sich durch eine hohe Kriechstromfestigkeit sowie eine hohe Steifigkeit aus.

## Beispiel 4

In 50 Gew.-% PBTP mit einer Viskositätszahl von 110 $cm^3/g$ werden mit Hilfe des Labor-Kokneters in gleicher Weise 20 Gew.-% Glasfasern und 30 Gew.-% calciniertes $MgSO_4$ eingearbeitet und an spritzgegossenen Formkörpern die in nachfolgender Tabelle angegebenen Eigenschaften ermittelt. Auch in diesem Falle wird eine hohe Kriechstromfestigkeit und Steifigkeit gefunden.

## Beispiel 5

In 50 Gew.-% PBTP (Viskositätszahl nach DIN 53 728/3, 110 $cm^3/g$) welche bezogen auf das Polymer 11 Gew.-% Decabromdiphenyloxid und 5,5 Gew.-% $Sb_2O_3$ enthält, werden in analoger Weise 20 Gew.-% Glasfasern und 30 Gew.-% calciniertes $MgSO_4$ eingearbeitet und an spritzgegossenen Formkörpern die in nachfolgender Tabelle angegebenen Eigenschaften ermittelt.

Auch in diesem Falle sind die elektrischen Eigenschaften sowie die Steifigkeit gut. $MgSO_4$ reduziert dabei auch die Tropfneigung bei der Brandprüfung nach UL-94, wodurch bei glasfaserverstärkten Polyestern in der flammhemmenden Wirkung eine Verbesserung festgestellt wird.

| Beispiel Nr. | Zusammensetzung | Kriechstromfestigkeit DIN 53 480 (Volt) Verf. KB | Verf. KC | E-Modul DIN 53 457 ($N/mm^2$) | Brennbarkeit UL-94 |
|---|---|---|---|---|---|
| 1 | 95 Gew.-% PBTP<br>5 Gew.-% calciniertes $MgSO_4$ | 425 | >600 | 3 000 | |
| 2 | 80 Gew.-% PBTP<br>20 Gew.-% calciniertes $MgSO_4$ | 550 | >600 | 3 500 | |
| 3 | 70 Gew.-% PBTP mit 11 Gew.-% Dekabromdiphenyloxid + 5,5 Gew.-% $Sb_2O_3$ bezogen auf das Polymer<br>30 Gew.-% calciniertes $MgSO_4$ | 250 | 425 | 5 600 | V-2 tropfend |

(Fortsetzung)

| Beispiel Nr. | Zusammensetzung | Kriechstromfestigkeit DIN 53 480 (Volt) Verf. KB | Verf. KC | E-Modul DIN 53 457 ($N/mm^2$) | Brennbarkeit UL-94 |
|---|---|---|---|---|---|
| 4 | 50 Gew.-% PBTP<br>20 Gew.-% Glasfasern<br>30 Gew.-% calciniertes $MgSO_4$ | 375 | >600 | 10 500 | |
| 5 | 50 Gew.-% PBTP mit 11 Gew.-% Dekabromdiphenyloxid + 5,5 Gew.-% $Sb_2O_3$ bezogen auf das Polymer<br>20 Gew.-% Glasfasern<br>30 Gew.-% calciniertes $MgSO_4$ | 225 | 475 | 12 900 | V-0 nicht tropfend |

## Patentansprüche

1. Formmasse auf der Basis von thermoplastischen Polyestern, die, bezogen auf die Gesamtmasse,

a) 40 bis 97 Gew.-% eines thermoplastischen Polyesters,
b) 3 bis 60 Gew.-% feinteiliges calciniertes Magnnesiumsulfat, und
c) gegebenenfalls weitere übliche Zusätze

enthält.

2. Formmasse gemäß Anspruch 1, dadurch gekennzeichnet, daß der Polyester ein Polyalkylenterephthalat ist.

3. Formmasse gemäß Anspruch 2, dadurch gekennzeichnet, daß das Polyalkylenterephthalat ein Polyäthylen- oder Poly-1,4-butylenterephthalat oder ein Copolyester auf der Basis Polyäthylen- oder Poly-1,4-butylenterephthalat ist.

4. Formmasse gemäß Anspruch 1, dadurch gekennzeichnet, daß sie zusätzlich einen verstärkenden Füllstoff enthält, wobei die Menge an verstärkendem Füllstoff und calciniertem Magnesiumsulfat höchstens 60 Gew.-% beträgt, bezogen auf die Gesamtmasse.

5. Formmasse gemäß Anspruch 4, dadurch gekennzeichnet, daß es sich bei dem verstärkenden Füllstoff um Glasfasern handelt.

6. Formmasse gemäß Anspruch 1, dadurch gekennzeichnet, daß sie zusätzlich 3 bis 25 Gew.-%, vorzugsweise 8 bis 20 Gew.-%, bezogen auf den Polyester, eines flammhemmenden Zusatzes enthält.

7. Formmasse gemäß Anspruch 6, dadurch gekennzeichnet, daß der flammhemmende Zusatz eine organische Chlor- oder Bromverbindung und Antimontrioxid ist.

8. Formmasse gemäß Anspruch 1, dadurch gekennzeichnet, daß sie 3 bis 40, vorzugsweise 10 bis 30 Gew.-% calciniertes Magnesiumsulfat enthält.

9. Formmasse gemäß Anspruch 4, dadurch gekennzeichnet, daß sie 3 bis 40 Gew.-% calciniertes Magnesiumsulfat und 5 bis 57 Gew.-% Glasfasern enthält.

10. Verwendung der Formmasse gemäß Anspruch 1 zur Herstellung von geformten Gegenständen.

## Claims

1. A thermoplastic polyester moulding composition which comprises, based on the total composition,

a) 40 to 97% by weight of a thermoplastic polyester,
b) 3 to 60% by weight of finely particulate calcined magnesium sulfate, and
c) optionally further conventional additives.

2. A moulding composition according to claim 1, wherein the polyester is a polyalkylene terephthalate.

3. A moulding composition according to claim 2, wherein the polyalkylene terephthalate is a polyethylene terephthalate or poly-1,4-butylene terephthalate or a copolyester based on polyethylene terephthalate or poly-1,4-butylene terephthalate.

4. A moulding composition according to claim 1, which additionally comprises a reinforcing filler, such that the amount of filler and calcined magnesium sulfate is at most 60% by weight, based on the total composition.

5. A moulding composition according to claim 4, wherein the reinforcing filler consists of glass fibres.
6. A moulding composition according to claim 1, which additionally contains 3 to 25% by weight, preferably 8 to 20% by weight, based on the polyester, of a flame-proofing additive.
7. A moulding composition according to claim 6, wherein the flame-proofing additive is an organic chlorine or bromine compound and antimony trioxide.
8. A moulding composition according to claim 1, which contains 3 to 40% by weight, preferably 10 to 30% by weight, of calcined magnesium sulfate.
9. A moulding composition according to claim 4, which contains 3 to 40% by weight of calcined magnesium sulfate and 5 to 57% by weight of glass fibres.
10. Use of a moulding composition according to claim 1 for the manufacture of moulded articles.

**Revendications**

1. Matière à mouler à base de polyesters thermoplastiques, matière qui, par rapport à son poids total, contient:

a) de 40 à 97% en poids d'un polyester thermoplastique,
b) de 3 à 60% en poids de sulfate de magnésium calciné et en fines particules,

et éventuellement

c) des additifs supplémentaires usuels.

2. Matière à mouler selon la revendication 1, caractérisée en ce que le polyester est un poly-(téréphtalate d'alkylène).
3. Matière à mouler selon la revendication 2, caractérisée en ce que le poly-(téréphtalate d'alkylène) est un poly-(téréphtalate d'éthylène) ou un poly-(téréphtalate de butylène-1,4) ou un copolyester à base de poly-(téréphtalate d'éthylène) et de poly-(téréphtalate de butylène-1,4).
4. Matière à mouler selon la revendication 1, caractérisée en ce qu'elle contient en outre une charge de renforcement, la quantité de la charge de renforcement et du sulfate de magnésium calciné étant d'au plus 60% en poids par rapport à l'ensemble de la matière.
5. Matière à mouler selon la revendication 4, caractérisée en ce que la charge de renforcement est constituée de fibres de verre.
6. Matière à mouler selon la revendication 1, caractérisée en ce qu'elle contient en outre de 3 à 25% en poids d'un additif ignifugeant, de préférence de 8 à 20% en poids, par rapport au polyester.
7. Matière à mouler selon la revendication 6, caractérisée en ce que l'additif ignifugeant est un composé organique chloré ou bromé et l'anhydride antimonieux.
8. Matière à mouler selon la revendication 1, caractérisée en ce qu'elle contient de 3 à 40% en poids de sulfate de magnésium calciné, de préférence de 10 à 30% en poids.
9. Matière à mouler selon la revendication 4, caractérisée en ce qu'elle contient de 3 à 40% en poids de sulfate de magnésium calciné et de 5 à 57% en poids de fibres de verre.
10. Application de la matière à mouler selon la revendication 1 pour la fabrication d'objets moulés.